# EUROPÄISCHE PATENTSCHRIFT

(11) **EP 1 764 983 B1**
(45) Veröffentlichungstag und Bekanntmachung des Hinweises auf die Patenterteilung: **06.05.2009**
(21) Anmeldenummer: 06019538.5
(22) Anmeldetag: 19.09.2006
(51) Int. Cl.: B60R 11/02, H04M 1/04

(54) **Aufnahmehalter für einen Telefonhalter**
Retention holder for telephone holder
Appareil de maintien pour un support de téléphone

(30) Priorität: 19.09.2005 DE 102005044720
(43) Veröffentlichungstag der Anmeldung: 21.03.2007
(73) Patentinhaber: Bury Sp.z.o.o, 39 300 Mielec (PL)
(72) Erfinder: Piekarz, Roman, 39-300 Mielec (PL)
(74) Vertreter: Lins, Edgar

(56) Entgegenhaltungen:
- EP-A- 1 233 598
- DE-U1- 20 316 891

## Beschreibung

Die Erfindung betrifft einen Aufnahmehalter für einen Telefonhalter, der einen rückwärtigen vorstehenden Gehäuseteil mit einem mit Kontakten versehenen Ansatz und an seiner Vorderseite eine Aufnahmetasche für ein Mobiltelefon aufweist,
mit einer Ausnehmung, die zur Aufnahme des rückwärtigen Gehäuseteils angepasst ist und an die sich eine einseitig offene Kontaktkammer anschließt, in der sich Gegenkontakte befinden und in die der Ansatz des Gehäuseteils zur Kontaktierung seiner Kontakte mit den Gegenkontakten einschiebbar ist, wobei das Gehäuseteil in die Ausnehmung eingesetzt ist,
mit einem die Ausnehmung an der der Kontaktkammer gegenüberliegenden Seite begrenzenden, verschiebbaren Wandstück, das eine Einführung des Gehäuseteils in die Ausnehmung derart, dass das Gehäuseteil an einem Boden der Ausnehmung anliegt, nur nach einer Verschiebung des Wandstücks gegen eine Federkraft ermöglicht und dass durch eine Verriegelung in seiner Verschiebbarkeit in einer Position blockierbar ist, die der Stellung des Wandstücks bei dem in die Ausnehmung eingesetzten und in die Kontaktkammer bis zur Kontaktierung eingeschobenen Ansatz entspricht,
und mit einer Abdeckung der Kontaktkammer, die sich über die Öffnung der Kontaktkammer erstreckt, mittels des Telefonhalters zur Freigabe der Öffnung der Kontaktkammer herunter drückbar ist, wobei die Verriegelung durch die Verriegelungsvorrichtung aktiviert ist, wenn sich die Abdeckung im heruntergedrückten Zustand befindet.

Ein derartiger Aufnahmehalter ist beispielsweise durch das unter der Marke THB BURY im Markt eingeführte System 8 bekannt. Die Abdeckung der Kontaktkammer ist dabei durch eine senkrecht zum Boden der Ausnehmung stehende Wand gebildet, die einstückig mit einer Auflaufschräge verbunden ist, die sich vom Boden der Ausnehmung bis zur Höhe der die Abdeckung bildenden Wand erstreckt. Durch das Einsetzen des Gehäuseteils des Telefonhalters mit seinem Ansatz wird die die Abdeckung bildende Wand über die Auflaufschräge nach unten gedrückt, sodass die Öffnung der Kontaktkammer freigegeben wird. Das Herunterdrücken der Auflaufschräge ist allerdings erst möglich, wenn das mit der Oberseite des Gehäuseteils verschiebbare Wandstück verschoben worden ist, sodass das Gehäuseteil eine Länge der Ausnehmung vorfindet, die ein Einsetzen des Gehäuseteils mit dem Ansatz auf den Boden der Ausnehmung ermöglicht. In diesem Zustand kann der Ansatz in die Kontaktkammer geschoben und die Kontaktierung der Kontakte hergestellt werden. Im kontaktierten Zustand verriegelt das Wandstück, und ist ohne Betätigung einer Entriegelungstaste nicht mehr verschiebbar. Somit ist der Telefonhalter in dem Aufnahmehalter unverlierbar gehalten und nur durch Betätigung der Entriegelungstaste und anschließendes Verschieben des verschiebbaren Wandstücks wieder entnehmbar.

Die Funktion des bekannten Aufnahmehalters ist optimal. Problematisch ist allerdings, dass durch das Verschieben der die Abdeckung der Öffnung der Kontaktkammer bildenden Wand, die Anlaufschräge nach unten (unter die Ebene des Bodens der Ausnehmung) eine Mindest-Bauhöhe des Aufnahmehalters erforderlich wird. Diese Mindest-Bauhöhe verursacht Probleme insbesondere dann, wenn der Aufnahmehalter beispielsweise in eine Mittekonsole eingebaut werden soll, in der für den Einbau häufig die genannte Mindest-Bauhöhe nicht zur Verfügung steht.

Der Erfindung liegt daher die Aufgabe zugrunde, einen Aufnahmehalter der genannten Art unter Beibehaltung der wesentlichen Funktionen mit einer geringeren Mindest-Bauhöhe auszubilden.

Zur Lösung dieser Aufgabe ist ein Aufnahmehalter der eingangs genannten Art erfindungsgemäß dadurch gekennzeichnet, dass die Abdeckung durch eine am Boden der Ausnehmung schwenkbar gelagerte, schräg stehende Klappe gebildet ist, mit der die Öffnung der Kontaktkammer durch Verschwenken in die Ebene des Bodens freigebbar ist.

Bei dem erfindungsgemäßen Aufnahmehalter ist die Abdeckung der Gegenkontakte durch eine schräg gestellte Klappe gebildet, die somit die Funktion der Auflaufschräge und der Abdeckung verbindet. Die schräg stehende Klappe wird durch den Ansatz des Gehäuseteils des Telefonhalters in die Ebene des Bodens der Ausnehmung gedrückt, sodass unterhalb des Bodens kein bisher erforderlicher Aufnahmeraum für eine die Abdeckung bildende Wand erforderlich ist, wodurch die Verringerung der Mindest-Bauhöhe gelingt.

Eine Verriegelung der die Abdeckung bildenden Klappe der Art, dass die Klappe erst bewegbar ist, wenn durch die Verschiebung des Wandstücks mittels der Oberseite des Gehäuseteils sichergestellt ist, dass das Gehäuseteil bereits parallel zum Boden gerichtet ist bzw. am Boden der Ausnehmung anliegt, kann entfallen, wenn in einer bevorzugten Ausführungsform die einseitig offene Kontaktkammer so dimensioniert ist, dass eine Einführung des Ansatzes des Gehäuseteils nur möglich ist, wenn das Gehäuseteil nach Verschiebung des Wandstücks parallel zum Boden ausgerichtet ist. Eine schräge Einführung des Ansatzes in die Kontaktkammer ist somit nur um ein so geringes Maß möglich, dass noch keine Kontaktierung der Kontakte des Ansatzes mit den Gegenkontakten der Kontaktkammer erfolgt, sodass eine irrtümliche Befestigung des Telefonhalters in dem Aufnahmehalter ohne Verriegelung sofort dadurch erkennbar ist, dass die elektrische Funktion, die über den Aufnahmehalter auf den Telefonhalter und das darin eingesetzte Mobiltelefon übertragen wird, nicht gewährleistet ist.

Die Verriegelung des verschiebbaren Wandstücks in der verriegelten Stellung, wenn das Gehäuseteil des Telefonhalters richtig eingesetzt worden ist, wird in einer bevorzugten Ausführungsform durch das Verschwenken der Klappe selbst gesteuert.

Die Erfindung soll im Folgenden anhand eines in der Zeichnung dargestellten Ausführungsbeispiels näher erläutert werden. Es zeigen:
- Figur 1: eine Draufsicht auf eine Ausführungsform eines erfindungsgemäßen Aufnahmehalters in einem Ausgangszustand;
- Figur 2: eine perspektivische Ansicht von schräg oben auf den Aufnahmehalter gemäß Figur 1 nach der Verschiebung des verschiebbaren Wandstücks;
- Figur 3: eine Ansicht des Aufnahmehalters gemäß Figur 2 von schräg oben derart, dass die Öffnung der Kontaktkammer sichtbar ist;
- Figur 4: einen Längsschnitt durch den Aufnahmehalter gemäß Figur 1 und durch einen schräg aufgesetzten Telefonhalter.

Die in der Zeichnung dargestellte Ausführungsform des erfindungsgemäßen Aufnahmehalters ist zum Einbau in eine Mittekonsole vorgesehen. Sie besteht daher aus einer eine Oberseite bildende Abdeckplatte 1, in der sich eine Ausnehmung 2 mit einem parallel zur Abdeckplatte 1 liegenden Boden 3 befindet. Die Ausnehmung 2 ist durch parallele Längs-Seitenwände 4 einerseits und durch ein oberes, verschiebbares Wandstück 5 sowie einen Aufbau 6 auf der gegenüberliegenden Stirnseite andererseits begrenzt. Eine Oberseite des Aufbaus 6 liegt parallel zu und oberhalb der Abdeckplatte 1. Von der Oberseite des Aufbaus 6 aus erstreckt sich eine schräg stehende Klappe 7 zum Boden 3 der Ausnehmung 2. Die Klappe 7 ist am Boden um eine Drehachse 8 schwenkbar gelagert.

Neben der Ausnehmung befindet sich eine Entriegelungstaste 9. Der Aufnahmehalter ist über ein Spiralkabel 10 und einen Stecker 11 mit einer zentralen Steuerung, beispielsweise in einem Kraftfahrzeug und insbesondere für eine Freisprecheinrichtung in einem Kraftfahrzeug, verbindbar.

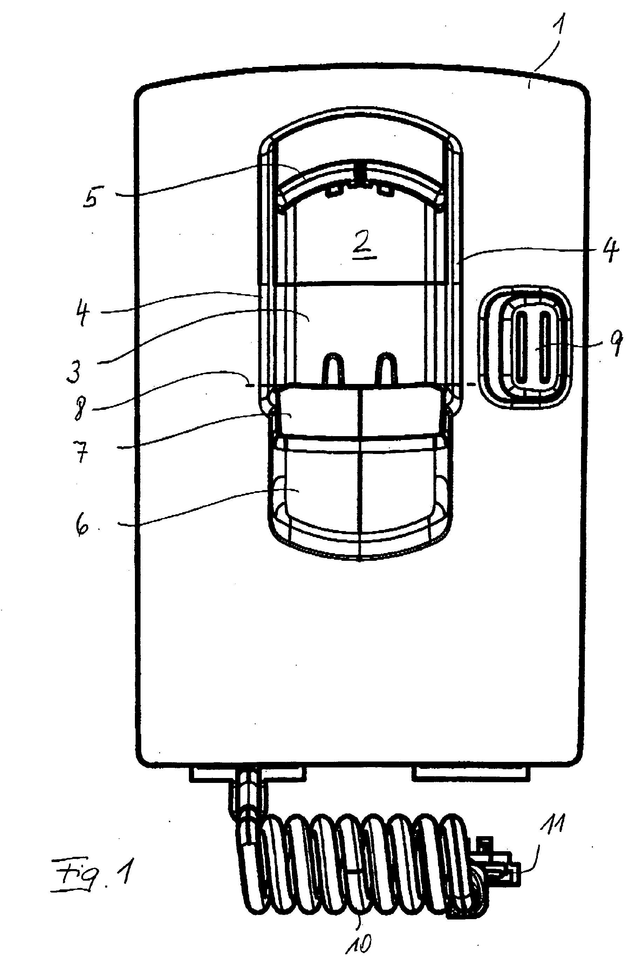

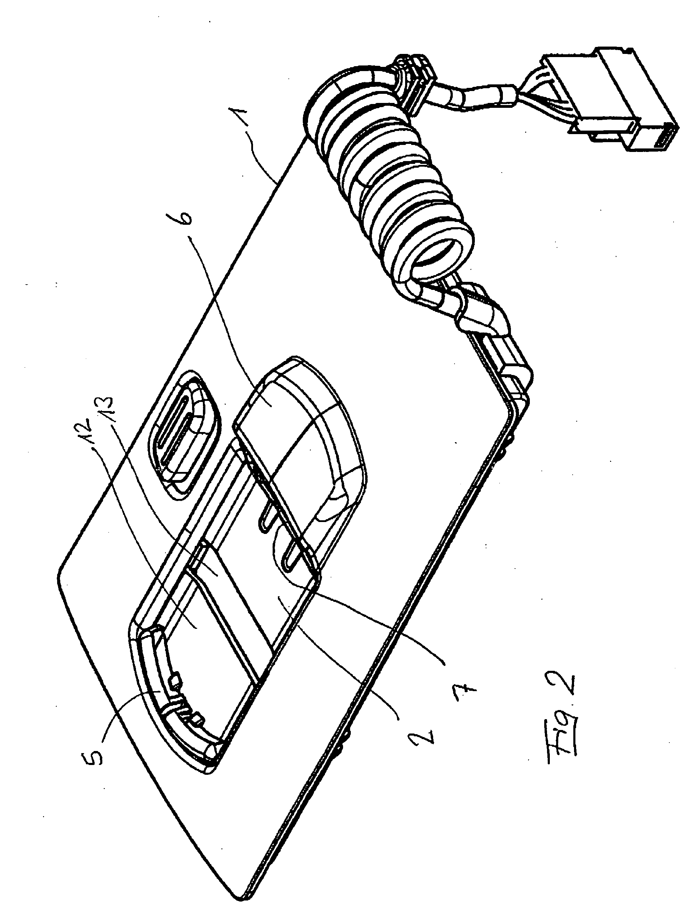

Figur 2 verdeutlicht, dass das verschiebbare Wandstück 5 aus der in Figur 1 dargestellten Ausgangsstellung nach oben, also von dem Aufbau 6 parallel zu den Längs-Seitenwänden 4 zusammen mit einem einstückig mit ihm verbundenen Bodenstück 12 verschiebbar ist, sodass zwischen einem feststehenden Teil des Bodens 2 und dem Bodenstück 12 ein Spalt 13 entsteht.

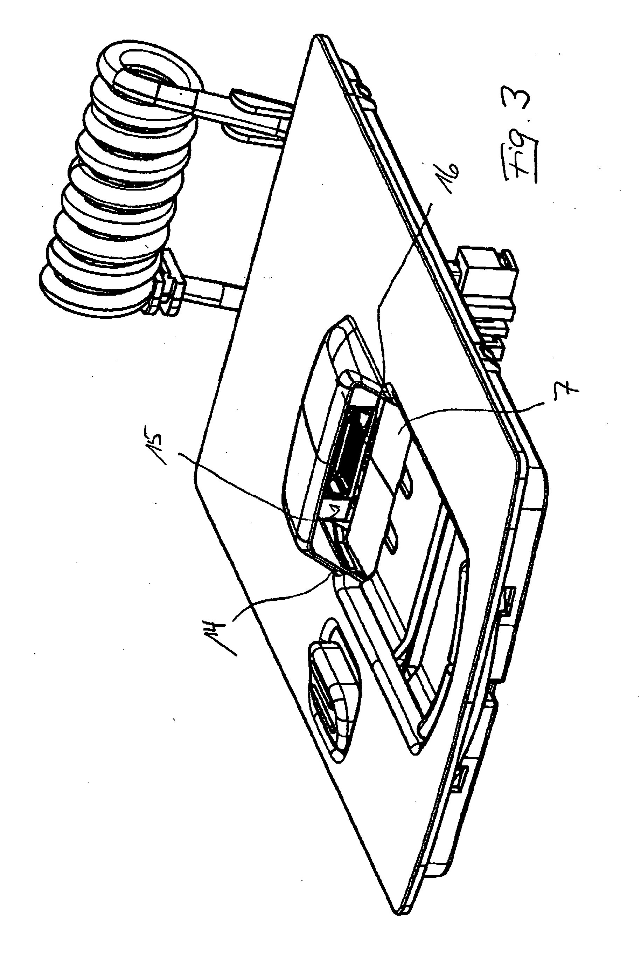

Wie Figur 3 verdeutlicht, kann die schräg stehende Klappe 7 um die Drehachse 8 nach unten, also in die Ebene des Bodens 2 verschwenkt werden, um somit eine Öffnung 14 einer Kontaktkammer 15 freizugeben, in der sich Gegenkontakte 16 befinden.

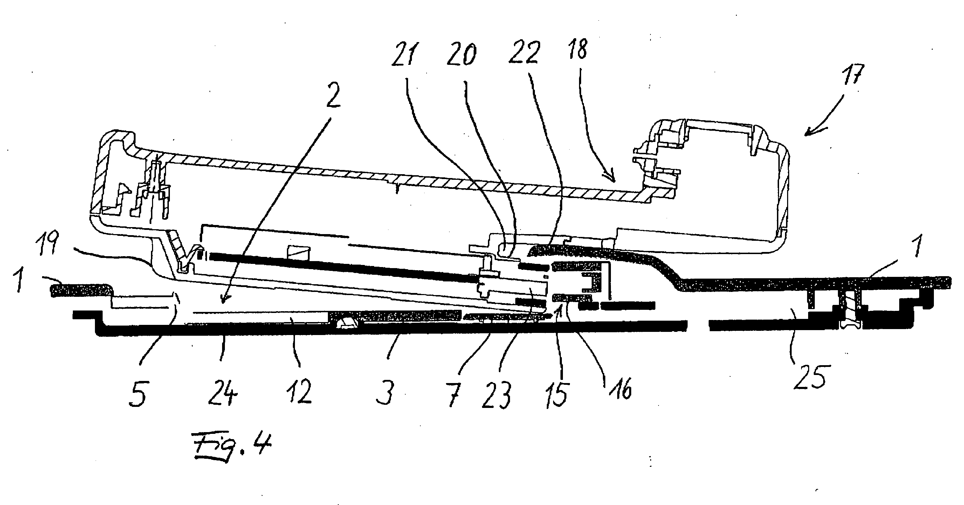

Figur 4 zeigt einen Längsschnitt durch den Aufnahmehalter gemäß den Figuren 1 bis 3 und durch einen Telefonhalter 17, der an seiner Vorderseite eine Aufnahmetasche 18 für ein Mobiltelefon aufweist. Der Telefonhalter 17 ist ferner mit einem rückwärtigen Gehäuseteil 19 versehen, dessen Abmessungen den Abmessungen der Ausnehmung 2 in der in den Figuren 2 und 3 dargestellten Stellung des verschiebbaren Wandstücks 5 entsprechen. In der Verlängerung des Gehäuseteils 19 befindet sich ein Ansatz 20, der mit dem Gehäuse des Telefonhalters 17 einen Zwischenraum 21 ausbildet, in den eine obere Wand 22 des Aufbaus 6 eingreifen kann.

In dem Ansatz 20 befinden sich Kontakte 23 des Telefonhalters 17. Die in der Kontaktkammer 15 angeordneten Gegenkontakte 16 sind zur Kontaktierung mit den Kontakten 23 ausgebildet.

Figur 4 lässt erkennen, dass der Telefonhalter 17 nicht in seine ordnungsgemäße Position, in der er mit seiner Rückseite parallel zum Boden 3 der Ausnehmung 2 liegt, bringbar ist, weil das vom Boden 3 hoch stehende Wandstück 5 in seiner Ausgangsstellung, wie sie in den Figuren 1 und 4 dargestellt ist, diese Ausrichtung des Telefonhalters 17 verhindert. Die Dimensionierung des Ansatzes 20, des Zwischenraums 21 und des Abstands zu der oberen Wand 22 des Aufbaus 6 von dem Boden 3 bedingt, dass in der dargestellten Schrägstellung Kontakte 23 nicht mit den Gegenkontakten 16 in Kontakt zu bringen sind.

Hierfür ist es vielmehr erforderlich, dass das Wandstück 5 von der Kontaktkammer 15 weg bis zum Anstoßen an die Abdeckplatte 1 geschoben wird. Dann kann der Telefonhalter 17 zu einer Rückseite parallel zum Boden 3 ausgerichtet und der Ansatz 20 soweit in die Kontaktkammer 15 eingeschoben werden, dass die Kontakte 23 mit den Gegenkontakten 16 in Berührung kommen und die elektrische Verbindung herstellen. In der eingeschobenen Stellung ist das Wandstück aufgrund einer Federbelastung in die in den Figuren 1 und 4 dargestellte Ausgangsposition zurückgestellt worden. Durch das Herabdrücken der Klappe 7 in die Ebene des Bodens 3 wird das verschiebbare Wandstück 5, vorzugsweise im Bereich des einstückig mit dem ihm verbundenen Bodenstücks 12 verriegelt, sodass der eingesetzte Telefonhalter 17 aufgrund des Hineinragens des Ansatzes 20 in die Kontaktkammer 15 und der Verhinderung der Auszugsbewegung des Ansatzes 20 aus der Kontaktkammer 15 durch das verriegelte Wandstück 5 nicht aus dem Aufnahmehalter entnehmbar ist. Hierzu muss die Verriegelung des Wandstücks 5 mit der Entriegelungstaste 9 gelöst werden, sodass ein unbeabsichtigtes Herausfallen oder Herausstoßen des Telefonhalters 17 aus dem Aufnahmehalter sicher verhindert wird.

Figur 4 lässt erkennen, dass die die Öffnung verschließende Klappe 7 durch das Einsetzen des Ansatzes 20 in die Ebene des Bodens 3 gedrückt wird und somit kein zusätzlicher Bauraum für das Versenken der Abdeckung der Öffnung 14 der Kontaktkammer 15 erforderlich ist.

Demgemäß kann unmittelbar unterhalb des Bodens 3 eine Gehäusewand 24 angebracht sein. Der hinter der Kontaktkammer 15 befindliche Raum 25 zwischen der Gehäusewand 24 und der Abdeckplatte 1 reicht aus, um die für den Aufnahmehalter vorgesehene Elektronik als Interface zwischen einer zentralen Steuerung und den Telefonhalter 17 und ggf. Bedienelemente aufzunehmen. Somit ergibt sich die Bauhöhe des Aufnahmehalters aus der Tiefe der Ausnehmung 2 und der Materialstärke für den Boden 3 und die Gehäusewand 24.

Lilho

## Patentansprüche

1. Aufnahmehalter für einen Telefonhalter (17), der einen rückwärtigen vorstehenden Gehäuseteil (19) mit einem mit Kontakten (23) versehenen Ansatz (20) und an seiner Vorderseite eine Aufnahmetasche (18) für ein Mobiltelefon aufweist, mit einer Ausnehmung (2), die zur Aufnahme des rückwärtigen Gehäuseteils (19) angepasst ist und an die sich eine einseitig offene Kontaktkammer (15) anschließt, in der sich Gegenkontakte (16) befinden und in die der Ansatz (20) des Gehäuseteils (19) zur Kontaktierung seiner Kontakte (23) mit den Gegenkontakten (16) einschiebbar ist, wobei das Gehäuseteil (19) in die Ausnehmung (2) eingesetzt ist,
mit einem die Ausnehmung (2) an der der Kontaktkammer (15) gegenüber liegenden Seite begrenzenden, verschiebbaren Wandstück (5), das eine Einführung des Gehäuseteils (19) in die Ausnehmung der Art, dass das Gehäuseteil (19) an einem Boden (3) der Ausnehmung (2) anliegt, nur nach einer Verschiebung des Wandstücks (5) gegen eine Federkraft ermöglicht und durch eine Verriegelungsvorrichtung in seiner Verschiebbarkeit in einer Position blockierbar ist, die der Stellung des Wandstücks (5) bei dem in die Ausnehmung (2) eingesetzten und in die Kontaktkammer (15) bis zur Kontaktierung eingeschobenen Ansatz (20) entspricht,
und mit einer Abdeckung (7) der Kontaktkammer (15), die sich über die Öffnung (14) der Kontaktkammer (15) erstreckt und mittels des Telefonhalters (17) zur Freigabe der Öffnung (14) der Kontaktkammer (15) herunter drückbar ist, wobei die Verriegelung durch die Verriegelungsvorrichtung aktiviert ist, wenn sich die Abdeckung (7) im herunter gedrückten Zustand befindet, **dadurch gekennzeichnet, dass** die Abdeckung durch eine am Boden (3) der Ausnehmung (2) schwenkbar gelagerte, schräg stehende Klappe (7) gebildet ist, mit der die Öffnung (14) der Kontaktkammer (15) durch Verschwenken in die Ebene des Bodens (3) freigebbar ist.

2. Aufnahmehalter nach Anspruch 1, **dadurch gekennzeichnet, dass** die einseitig offene Kontaktkammer (15) so dimensioniert ist, dass eine Einführung des Ansatzes (20) des Gehäuseteils (19) nur möglich ist, wenn das Gehäuseteil (19) nach Verschiebung des Wandstücks (5) parallel zum Boden (3) ausgerichtet ist.

3. Aufnahmehalter nach Anspruch 1 oder 2, **dadurch gekennzeichnet, dass** die Verriegelung mit der Verriegelungsvorrichtung durch die Verschwenkung der Klappe (7) steuerbar ist.

## Claims

1. Mount for a phone holder (17) which has a rear projecting housing part (19) with an extension (20) provided with contacts (23) and, on its front side, an accommodating pocket (18) for a cell phone, having a recess (2) which is adapted for accommodating the rear housing part (19) and is adjoined by a contact chamber (15) which is open on one side, contains mating contacts (16) and into which the extension (20) of the housing part (19) can be pushed for the contact-connection between the contacts (23) of the latter and the mating contacts (16), the housing part (19) being inserted into the recess (2),
having a displaceable wall component (5) which bounds the recess (2) on the side located opposite the contact chamber (15), which allows the housing part (19) to be introduced into the recess, such that the housing part (19) butts against a base (3) of the recess (2), only once the wall component (5) has been displaced counter to a spring force and which can be blocked in terms of displaceability by a locking device in a position which corresponds to the position of the wall component (5) with the extension (20) inserted into the recess (2) and pushed into the contact chamber (15) to the contact-connection state,
and having a covering (7) of the contact chamber (15), which extends over the opening (14) of the contact chamber (15) and can be pushed down by means of the phone holder (17) in order to release the opening (14) of the contact chamber (15), locking being activated by the locking device when the covering (7) is in the pushed-down state, **characterized in that** the covering is formed by an obliquely positioned flap (7) which is mounted in a pivotable manner on the base (3) of the recess (2) and by means of which the opening (14) of the contact chamber (15) can be released by virtue of the flap being pivoted into the plane of the base (3).

2. Mount according to Claim 1, **characterized in that** the contact chamber (15), which is open on one side, is dimensioned such that the extension (20) of the housing part (19) can only be introduced when the housing part (19), following displacement of the wall component (5), is oriented parallel to the base (3).

3. Mount according to Claim 1 or 2, **characterized in that** locking with the locking device can be controlled by the pivoting of the flap (7).

## Revendications

1. Support de réception pour un support de téléphone (17), qui présente une partie arrière de boîtier (19) faisant saillie comprenant un talon (20) muni de contacts (23), et sur sa face avant une poche de réception (18) pour un téléphone mobile, le support de réception comprenant
un évidement (2) qui est adapté pour recevoir la partie arrière de boîtier (19) et auquel se rattache une chambre de contact (15) ouverte d'un seul côté, dans laquelle se trouvent des contacts conjugués (16) et dans laquelle le talon (20) de la partie de boîtier (19) est insérable pour mettre en contact les contacts (23) du talon avec les contacts conjugués (16), la partie de boîtier (19) étant introduite dans l'évidement (2),
une pièce de cloison (5) déplaçable qui délimite l'évidement (2) du côté opposé à la chambre de contact (15), et qui permet, uniquement après un déplacement de la pièce de cloison (5) contre une force de ressort, une insertion de la partie de boîtier (19) dans l'évidement, de façon que la partie de boîtier (19) soit appliquée contre un fond (3) de l'évidement (2), et qui, par un dispositif de verrouillage, est blocable dans sa faculté de déplacement dans une position qui correspond à la position de la pièce de cloison (5) lorsque le talon (20) est introduit dans l'évidement et inséré dans la chambre de contact (15) jusqu'à la mise en contact, et
un cache (7) de la chambre de contact (15), s'étendant sur l'ouverture (14) de la chambre de contact (15) et pouvant être appuyé vers le bas au moyen du support de téléphone (17) pour libérer l'ouverture (14) de la chambre de contact (15), le verrouillage par le dispositif de verrouillage étant activé lorsque le cache (7) se trouve dans l'état appuyé vers le bas, **caractérisé en ce que** le cache est formé par un clapet (7) disposé en biais, monté pivotant sur le fond (3) de l'évidement (2), et avec lequel l'ouverture (14) de la chambre de contact (15) est libérable par pivotement jusque dans le plan du fond (3).

2. Support de réception selon la revendication 1, **caractérisé en ce que** la chambre de contact (15) ouverte d'un seul côté est dimensionnée de telle façon qu'une introduction du talon (20) de la partie de boîtier (19) n'est possible que lorsque la partie de boîtier (19) est orientée parallèlement au fond (3), après déplacement de la pièce de cloison (5).

3. Support de réception selon la revendication 1 ou 2, **caractérisé en ce que** le verrouillage avec le dispositif de verrouillage est pilotable par pivotement du clapet (7).
